# EUROPEAN PATENT SPECIFICATION

(11) **EP 3 273 051 B1**
(45) Date of publication and mention of the grant of the patent: **01.09.2021**
(21) Application number: 16179946.5
(22) Date of filing: 18.07.2016
(51) Int. Cl.: F03D 1/00, F03D 13/20

(54) **TOWER DAMPER**
TURMDÄMPFER
AMORTISSEUR DE TOUR

(43) Date of publication of application: 24.01.2018
(73) Proprietor: Siemens Gamesa Renewable Energy A/S, 7330 Brande (DK)
(72) Inventor: Nielsen, Jacob Arbjerg Lindholm, 5580 Nr. Aaby (DK); Redd, Ronald Dannon, 6630 Rodding (DK); Torrielli, Alessio, 7100 Vejle (DK); Wenneker, Frits, 2625 XZ Delft (NL)
(74) Representative: Aspacher, Karl-Georg

(56) References cited:
- DE-A1- 10 309 825
- US-A1- 2013 031 859

## Description

The present invention relates to an arrangement comprising a tower of a wind turbine and a damping device, wherein the damping device is arranged and prepared to reduce undesired movements of the tower. In particular, the inventive arrangement relates to undesired oscillatory movements of the tower.

A common problem of wind turbine towers are undesired movements of the tower, wherein these undesired movements often times having the characteristics of oscillatory movements. These undesired tower movements mainly occur because a tower of a wind turbine is typically an elongated object having a considerable length. Therefore, the wind turbine tower is exposed to wind which impinges on the wind turbine tower and cause these movements. Oscillation of the wind turbine towers mainly occur during storage of the tower at a storage site, often close to an harbor, or during transportation of the tower on a vessel to an offshore installation site of the wind turbine.

Until now, these undesired tower oscillations have widely been accepted. They are, for instance, encountered by reinforced attachment devices of the tower with regard to the ground where the tower is situated on. Two different ways of addressing tower vibrations are known from US 2013/031859 A1 and DE 103 09 825 A1.

An alternative method to cope with the problem of these undesired movements of the tower are the provision of VIV (vortex induced vibration) strakes which are attached to the tower. Preferred sections of the tower where the VIV strakes are mounted on are the upper third or upper half of the tower. The drawbacks of the approach to include VIV strakes are safety issues during mounting and dismounting of the VIV strakes to and from the tower, respectively, and the risk that the coating, i.e. paint, of the tower is damaged by the VIV strakes.

In more detail, the safety issue during mounting of the VIV strakes consists of the fact that someone needs to climb up the tower for working on the top platform of the tower, which means that work at a considerable height, for example higher than 100 meter above ground, needs to be carried out. The same problem occurs during dismounting of the VIV strakes. Additionally, additional costs due to the labor work exist. There is also the drawback that are part of strakes are dropped off and hit the ground.

With regard to the damages of the paint, repairing these damages in particular off-shore is very expensive.

Bearing all these drawbacks of the state of the art in mind, an improved concept of reducing movements, in particular oscillatory movements, of the tower of the wind turbine with regard to the ground where the tower is situated on, is desired.

This problem is solved by the subject matter of the independent claim. Advantageous modifications and embodiments are enclosed in the dependent claims.

According to the invention, there is provided an arrangement comprising a tower of a wind turbine and a damping device, wherein the tower is situated on a surface, and wherein the damping device is arranged between the tower and the surface.

Note that the present invention is not directed towards a damping device inside or outside of the tower which aims to prevent undesired movements of the tower during operation of the wind turbine. Moreover, the present invention proposes the provision of a damping device between the tower of the wind turbine and the surface. The surface may also been described as the ground or as a floor where the tower is situated on or located at.

The ground may be part of a deck of a vessel and the tower may be temporarily located on the deck of the vessel. This application of the inventive concept is therefore directed to off-shore wind turbines, i.e. towers of a wind turbine which are used for off-shore installations of wind turbines. The notion "temporarily" includes time spans of a day, several days or weeks but not exceeding a maximum time span of two months.

Another possible situation wherein the present invention is useful is the scenario where the tower is situated on or at a storage site ashore and the tower is temporarily located at the storage side ashore, e.g. close to or at a harbor. Typically, before transportation of the wind turbine tower to the installation site ashore, the tower is stored at a certain area. This area is advantageously located close to the harbor or even is a part of the harbor. During the time at which the tower is actually transported on the vessel to the installation site, the tower is also exposed to wind and therefore may also suffer from undesired movements, for example oscillatory movements. Therefore, it is also desired to reduce and minimize these movements. By providing a damping device between the tower and the surface during this time, a benefit is also reached.

Note that the notion "temporarily" in this context amounts to typically a few days, weeks or a few months. For the temporary storage of the tower at the storage site, extended time spans may apply meaning several months. However, a time span of two years maximum is not exceeded.

Yet, another use or application not forming part of the present invention is the provision of the damping device between the tower and the surface while the tower is permanently attached to a foundation. Therefore, in this context, the notion "surface" has to be understood as being a part of the foundation of the wind turbine.

A tower is called and understood to be permanently attached if the attachment is present during a time span exceeding two years. In other words, it may also be advantageous to use the present invention for a permanent installation of the wind turbine as therefore undesired movements of the tower are permanently minimized.

The tower may be understood as a elongated object with a longitudinal axis. The longitudinal axis of the tower may advantageously be orientated substantially vertical with regard to the surface.

In particular, the tower of the wind turbine is standing on the surface. The present inventive concept is particularly beneficial if the tower is erected and has a substantially vertical orientation.

"Substantial" in this context refers and includes deviations up to 20 %, in particular 10 % of a perfect vertical orientation.

Note, however, that in principal the concept may also be applied to towers which are arranged in a different orientation, for example an angled orientation comprising an angle smaller than 90 degrees. In principle, the concept may even be applied to horizontally stored towers.

In a particularly beneficial embodiment of the invention, the damping device comprises a laminated elastomeric bearing comprising an inner elastomeric material, in particular rubber, a first connector plate and a second connector plate. The laminated elastomeric bearing is arranged between the two connector plates, wherein the first connector plate is arranged and prepared to be connected to the surface, and the second connector plate is arranged and prepared to be connected to the tower.

The configuration of the damping device, in particular the configuration of the laminated elastomeric bearing being arranged between the two connector plates, may also be described as a sandwich configuration. Such a configuration has been proven to be particularly efficient both with regard to the damping potential and with regard to the ability to tightly and reliably connect the damping device to both the surface and the tower.

In another embodiment of the invention, the damping device furthermore comprises a supporting element, such as an annular frame or a plurality of individual supporting blocks. The first connector plate is connected to the surface via the supporting element.

In other words, in this embodiment of the invention, the damping device is not connected directly to the surface, but a supporting element between the damping device and the ground is included. In other words, the supporting element such as a frame or individual supporting blocks are a part of the damping device.

In another embodiment of the invention, the tower comprises a base flange, and the second connector plate is connected to the base flange of the tower.

It is common that a tower of a wind turbine comprises a flange at its bottom end. Via this flange the tower is usually connected to the foundation, i.e. to the surface. Therefore, beneficially, the second connector plate of the damping device is connected to the tower at the bottom end, in particular at the base flange of the tower.

In another embodiment of the invention, the damping device furthermore comprises in a adaptor plate, and the second connector plate is connected to the base flange of the tower via the adaptor plate.

An advantage of the provision of such an adaptor plate is a facilitated and more efficient actual connection between the second connector plate to the base flange of the tower. Such an adaptor plate may be designed and customized according to the specific specification of the base flange of the tower without the need of adapting the second connector plate of the damping device. Therefore, a more standard setup of the damping device, in particular the second connector plate of the damping device, is possible.

In yet another embodiment of the invention, the adaptor plate is attached to the base flange of the tower by means of a plurality of bolts. Such a bolt connection of the adaptor plate to the base flange has the advantage that it can easily be carried out when the damping device is connected to the tower of the wind turbine and that such a connection is detachable. In particular, for the case of a temporary use of the damping device, an easy and efficient detachment of the damping device from the tower of the wind turbine is important.

The invention is now described, by way of example only, by means of the accompanying drawings, of which:
- Figure 1: shows an arrangement comprising a tower of a wind turbine and a damping device;
- Figure 2: shows an arrangement comprising a tower of a wind turbine in a damping device in a cross sectional view;
- Figure 3: is a close-up view of a base flange of the tower being connected to a damping device;
- Figure 4: shows a damping device including several individual supporting blocks; and
- Figure 5: shows an explosion view of an embodiment of a damping device.

The illustration in the drawings is schematically. Note that similar features and elements are denoted by the same reference signs accordingly.

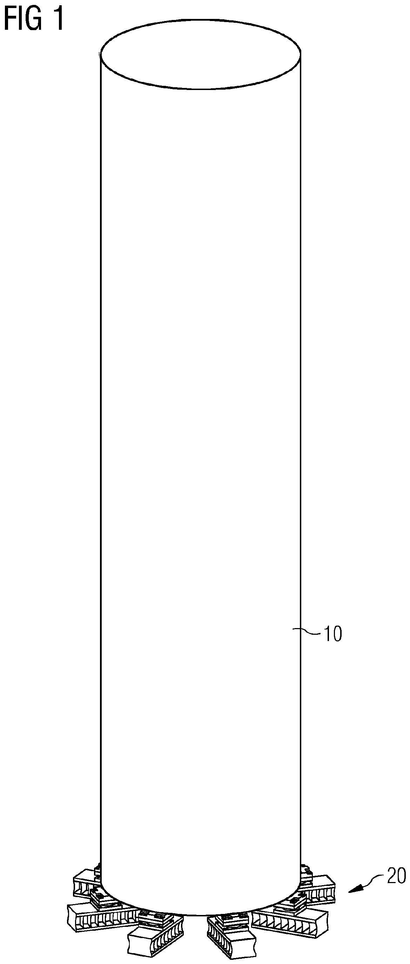

Figure 1 shows an arrangement comprising a tower 10 of a wind turbine, which is arranged upon a damping device 20. The tower 10 has a tubular shape and is slightly tapered towards the top of the tower. The tower 10 is sitting at its bottom on the damping device 20. The damping device 20 is illustrated in more detail in the following drawings.

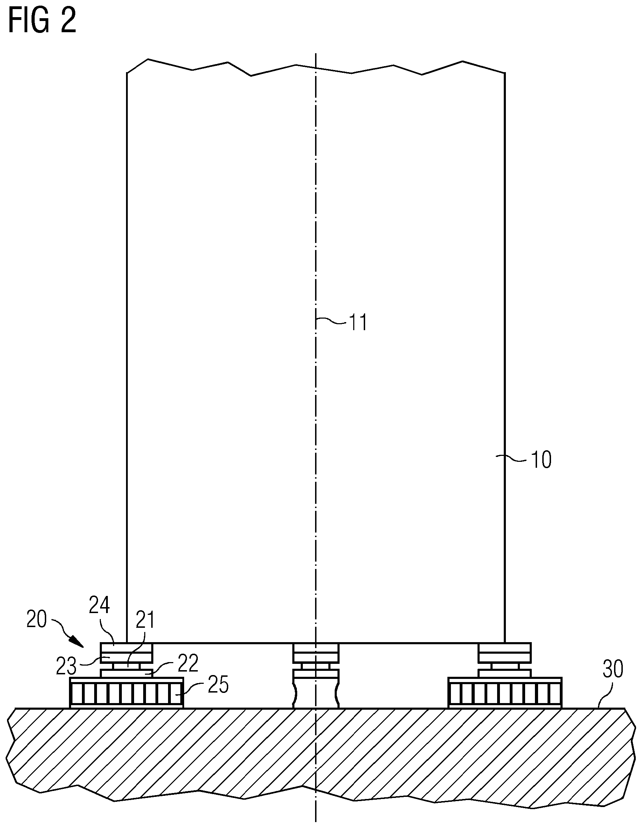

A cross sectional view of the inventive arrangement is illustrated in Figure 2. Therein, a part of a tower 10 of a wind turbine can be seen. The tower 10 has a rotationally symmetric shape such that a longitudinal axis 11 can be assigned to the tower 10. The angle between the longitudinal axes of the tower 11 and the surface 30 is 90 degree. In other words, the tower 10 is vertically directed on the surface 30. However, the tower 10 is not located directly on the surface 30, but a damping device 20 is arranged between the bottom of the tower 10 and the surface. The damping device 20 comprises several individual elements. Each individual element comprises a laminated elastomeric bearing 21, which is sandwiched between a first connector plate 22 and a second connector plate 23. The first connector plate 22 is arranged towards the tower 10. However, there is provided an adaptor plate 24 between the tower 10 and the first connector plate 22. This adaptor plate 24 facilitates the connection between the first connector plate 22 and the bottom end of the tower 10.

The second connector plate 23 is also not directly connected to the surface 30. However there is also for seen a further element which is referred to as a supporting block 25 between the second connector plate 23 and the ground 30. This supporting block 30 is one of several possibilities of a supporting element in general. Alternatively, instead of providing a plurality of individual supporting blocks, there may for example also be provided a circular frame for supporting the remaining parts of the damping device.

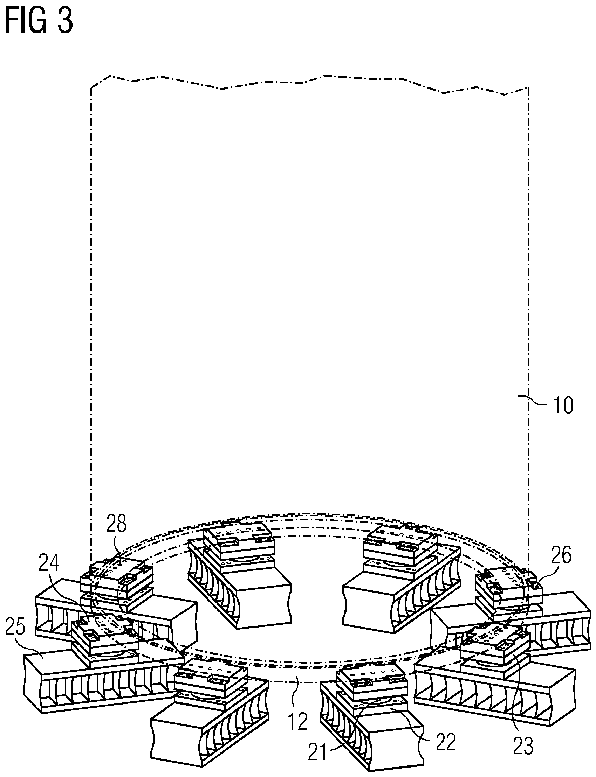

Figure 3 shows a close-up view of the arrangement comprising a tower 10 of a wind turbine and a damping device 20. The tower 10 is shown as comprising a base flange 12 and tower walls which in Figure 3 are only for sake of clarity drawn as dash-dotted lines. In practice, the tower walls and the base flange 12 may well be manufactured as one piece and the base flange 12, in particular its inner ring, may well be invisible from the outside.

The base flange 12 of the tower 10 is connected to the damping device 20 via a plurality of base flange bolts 28. In the example as illustrated in Figure 3, five base flange bolts 28 are used for each individual supporting block 25. Note that of course the base flange bolts 28 do not extend through until the supporting blocks 25 but just connect the base flange 12 with the adaptor plate 24.

Figure 3 furthermore discloses the first connector plate 22, the laminated elastomeric bearing 21 and the second connector plate 23. Figure 3 also shows the bolts 26 which connect the adaptor plate 24 with the first connector plate 22.

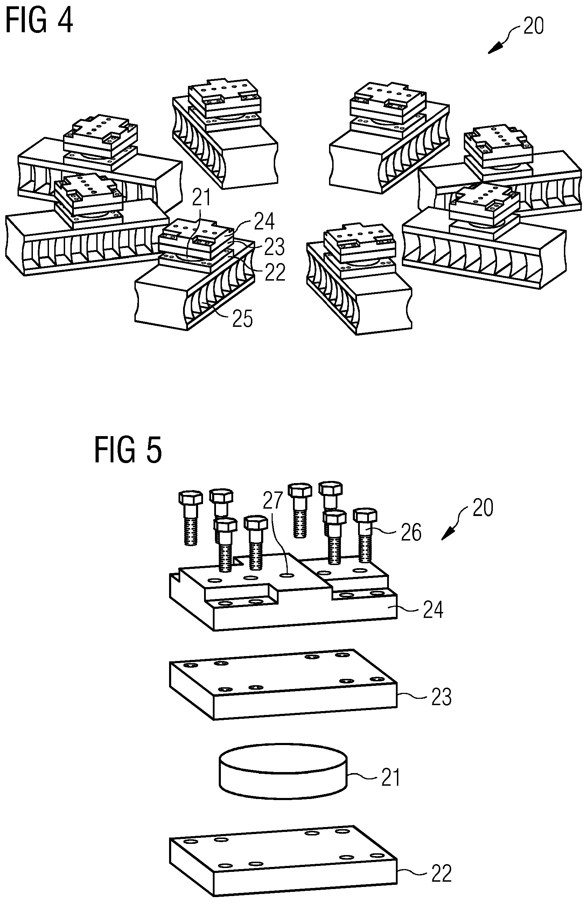

Figure 4 only shows the damping device 20 without illustrating the tower of a wind turbine. Again, the damping device 20 comprises a plurality of supporting blocks 25 which are directly connected to the first connector plate 22. The first connector plate 22 is connected to the laminated elastomeric bearing 21 which is sandwiched by the second connector plate 23 on the other side. The second connector plate 23 is connected via bolts 26 with an adaptor plate 24.

Finally, Figure 5 illustrates in an explosion view an embodiment of an inventive damping device. It can be well seen that the damping device comprises as a key element laminated elastomeric bearing 21 which are covered at the top and at the bottom by the first connector plate 22 and the second connector plate 23, respectively. The second connector plate 23 is connected via a plurality of bolts 26 with an adaptor plate 24. Also note the five base flange bores 27 which are drilled into the adaptor plate 24. These base flange bores 27 are arranged and prepared to accommodate and receive the base flange bolts 28, which are for example disclosed in Figure 3.

## Claims

1. Arrangement comprising a tower (10) of a wind turbine and a damping device (20), wherein the tower (10) is situated on a surface (30), whereby the damping device (20) is arranged between the tower (10) and the surface (30),
**characterized in that**
- the surface (30) is a part of a deck of a vessel or storage site ashore, and the tower (10) is temporarily located on the deck of the vessel or at the storage site ashore, e.g. at a harbor

2. Arrangement according to claim 1,
wherein
- the tower (10) is an elongated object with a longitudinal axis (11), and
- the longitudinal axis (11) of the tower (10) is orientated substantially vertical with regard to the surface (30).

3. Arrangement according to one of the preceding claims, wherein
- the damping device (20) comprises a laminated elastomeric bearing (21) comprising an elastomeric material, in particular rubber, a first connector plate (22) and a second connector plate (22),
- the laminated elastomeric bearing (21) is arranged between the first connector plate (22) and the second connector plate (23),
- the first connector plate (22) is arranged and prepared to be connected to the surface (30), and
- the second connector plate (23) is arranged and prepared to be connected to the tower (10).

4. Arrangement according to one of the preceding claims, wherein
- the damping device (20) furthermore comprises a supporting element, such as an annular frame or a plurality of individual supporting blocks (25), and
- the first connector plate (22) is connected to the surface (30) via the supporting element.

5. Arrangement according to one of the preceding claims, wherein
- the tower (10) comprises a base flange (12), and
- the second connector plate (23) is connected to the base flange (12) of the tower (10).

6. Arrangement according to one of the preceding claims, wherein
- the damping device (20) furthermore comprises an adaptor plate (24), and
- the second connector plate (23) is connected to the base flange (12) of the tower (10) via the adaptor plate (24).

7. Arrangement according to claim 6,
wherein the adaptor plate (24) is attached to the base flange (12) of the tower (10) by means of a plurality of bolts (26).

## Patentansprüche

1. Anordnung, die einen Turm (10) einer Windenergieanlage und eine Dämpfungsvorrichtung (20) umfasst, wobei sich der Turm (10) auf einer Oberfläche (30) befindet, wodurch die Dämpfungsvorrichtung (20) zwischen dem Turm (10) und der Oberfläche (30) angeordnet ist,
**dadurch gekennzeichnet, dass**
- die Oberfläche (30) zu einem Deck eines Wasserfahrzeugs oder einem Lagerungsort an Land gehört und sich der Turm (10) vorübergehend an Deck des Wasserfahrzeugs oder an dem Lagerungsort an Land, z.B. in einem Hafen, befindet.

2. Anordnung nach Anspruch 1,
wobei
- es sich bei dem Turm (10) um einen länglichen Gegenstand mit einer Längsachse (11) handelt und
- die Längsachse (11) des Turms (10) in Bezug auf die Oberfläche (30) im Wesentlichen vertikal ausgerichtet ist.

3. Anordnung nach einem der vorhergehenden Ansprüche,
wobei
- die Dämpfungsvorrichtung (20) ein bewehrtes Elastomerlager (21), das ein Elastomermaterial, insbesondere Kautschuk, umfasst, eine erste Verbinderplatte (22) und eine zweite Verbinderplatte (22) umfasst,
- das bewehrte Elastomerlager (21) zwischen der ersten Verbinderplatte (22) und der zweiten Verbinderplatte (23) angeordnet ist,
- die erste Verbinderplatte (22) so angeordnet und ausgelegt ist, dass sie sich mit der Oberfläche (30) verbinden lässt, und
- die zweite Verbinderplatte (23) so angeordnet und ausgelegt ist, dass sie sich mit dem Turm (10) verbinden lässt.

4. Anordnung nach einem der vorhergehenden Ansprüche,
wobei
- die Dämpfungsvorrichtung (20) ferner ein Trägerelement wie einen ringförmigen Rahmen oder mehrere einzelne Trägerblöcke (25) umfasst und
- die erste Verbinderplatte (22) über das Trägerelement mit der Oberfläche (30) verbunden ist.

5. Anordnung nach einem der vorhergehenden Ansprüche,
wobei
- der Turm (10) einen Bodenflansch (12) umfasst und
- die zweite Verbinderplatte (23) mit dem Bodenflansch (12) des Turms (10) verbunden ist.

6. Anordnung nach einem der vorhergehenden Ansprüche,
wobei
- die Dämpfungsvorrichtung (20) ferner eine Adapterplatte (24) umfasst und
- die zweite Verbinderplatte (23) über die Adapterplatte (24) mit dem Bodenflansch (12) des Turms (10) verbunden ist.

7. Anordnung nach Anspruch 6,
wobei die Adapterplatte (24) mithilfe mehrerer Bolzen (26) an dem Bodenflansch (12) des Turms (10) angebracht ist.

## Revendications

1. Agencement comprenant une tour (10) d'une éolienne et un dispositif d'amortissement (20), dans lequel la tour (10) est située sur une surface (30), ce par quoi le dispositif d'amortissement (20) est agencé entre la tour (10) et la surface (30), **caractérisé en ce que**
- la surface (30) fait partie d'un pont d'un navire ou d'un site de stockage à terre, et la tour (10) est temporairement située sur le pont du navire ou au niveau du site de stockage à terre, par exemple au niveau d'un port.

2. Agencement selon la revendication 1,
dans lequel
- la tour (10) est un objet allongé ayant un axe longitudinal (11), et
- l'axe longitudinal (11) de la tour (10) est orienté sensiblement verticalement par rapport à la surface (30).

3. Agencement selon l'une des revendications précédentes,
dans lequel
- le dispositif d'amortissement (20) comprend un palier élastomère stratifié (21) comprenant un matériau élastomère, en particulier du caoutchouc, une première plaque de liaison (22) et une seconde plaque de liaison (22),
- le palier élastomère stratifié (21) est agencé entre la première plaque de liaison (22) et la seconde plaque de liaison (23),
- la première plaque de liaison (22) est agencée et préparée pour être reliée à la surface (30), et
- la seconde plaque de liaison (23) est agencée et préparée pour être reliée à la tour (10).

4. Agencement selon l'une des revendications précédentes,
dans lequel
- le dispositif d'amortissement (20) comprend en outre un élément de support, tel qu'un cadre annulaire ou une pluralité de blocs de support individuels (25), et
- la première plaque de liaison (22) est reliée à la surface (30) via l'élément de support.

5. Agencement selon l'une des revendications précédentes,
dans lequel
- la tour (10) comprend une bride de fixation au sol (12), et
- la seconde plaque de liaison (23) est reliée à la bride de fixation au sol (12) de la tour (10).

6. Agencement selon l'une des revendications précédentes,
dans lequel
- le dispositif d'amortissement (20) comprend en outre une plaque adaptatrice (24), et
- la seconde plaque de liaison (23) est reliée à la bride de fixation au sol (12) de la tour (10) via la plaque adaptatrice (24) .

7. Agencement selon la revendication 6,
dans lequel la plaque adaptatrice (24) est attachée à la bride de fixation au sol (12) de la tour (10) au moyen d'une pluralité de boulons (26).
